# EUROPEAN PATENT SPECIFICATION

(11) **EP 0 887 873 B1**
(45) Date of publication and mention of the grant of the patent: **25.05.2005**
(21) Application number: 98201996.0
(22) Date of filing: 09.09.1992
(51) Int. Cl.: H01M 2/26, H01M 2/28

(54) **Method of manufacturing the end connectors of a battery by the cast-on-strap process (COS)**
Verfahren zur Herstellung der Endpolen einer Batterie durch Brückenangussverfahren (COS)
Méthode de fabrication des connecteurs terminaux d'une batterie par procédé de moulage de barres de connection (COS)

(30) Priority: 10.09.1991 US 757447
(43) Date of publication of application: 30.12.1998
(62) Divisional of application: 92920185.3
(73) Proprietor: GP Batteries International Limited, Singapore 629543 (SG)
(72) Inventor: Juergens, Tristan E., Black Hawk, Colorado 80403 (US)
(74) Representative: Lucas, Brian Ronald

(56) References cited:
- WO-A-91/08596
- DE-A- 2 024 172
- GB-A- 582 654
- GB-A- 1 136 009
- US-A- 3 915 218
- PATENT ABSTRACTS OF JAPAN vol. 012, no. 115 (E-599), 12 April 1988 (1988-04-12) -& JP 62 243246 A (SHIN KOBE ELECTRIC MACH CO LTD), 23 October 1987 (1987-10-23)

## Description

This invention relates to a method of manufacturing a battery and to a battery manufactured by said method.

Batteries are typically constructed with a set of anode plates and a set of interleaving cathode plates, which are spaced apart by separators infused with an electrolyte. The anode plates must be electrically connected to the battery anode terminal, and the cathode plates must be electrically connected to the battery cathode terminal. For the sake of rigidity the connection between the plates and the terminals is typically mechanical as well as electrical, and is accomplished via an end connector.

The attachment of the anode and cathode plates to their respective end connectors is one of the more labour intensive and fault intensive aspects of battery construction. Ideally, the end connector should rigidly support the plates to help prevent their deformation within the battery case and to resist vibrational damage to the plates and separators. Further, the end connectors should be formed of a material that is readily connectable to both the battery terminal and to the plates in a manner that assures an easy and dependable electrical and mechanical connection. It is particularly important that the electrical connection to both the plates and the battery terminals be of the lowest possible resistance, or at least of a resistance no greater than the resistance in the plates and battery terminals themselves, so that the impedance of the connection is minimised and the current carrying capacity is maximised.

These goals become especially important in a battery with extremely thin plates. Several prior art documents describe electrically connecting an electrode plate of a battery and an electrode connector establishing electrical communication between the battery plates and the terminals; the connection is established by a melt casting process (WO91/08596, US-A-3,764,386, JP-A-62243246, DE-A-2024172, EP-A-051349, EP-A-314318, EP-A-251683, US-A-4,495,250). A laminated foil arrangement of a battery exhibiting outer lead layers of thickness 0.25mm is described in EP-A-051349.

According to the invention there is provided a method of manufacturing a battery, said method being as defined in claim 1 of the appended claims.

When correctly executed the connection between the first end connector and the first electrical plate has a crystalline structure with substantially no discontinuation. This results in a strong mechanical structure that offers excellent electrical conductivity.

If desired, the first electrical plate may be impermeable. Alternatively, it may be permeable.

Preferably, said molten metal is contained in an open-end connector mould.

Advantageously, said edge of said first electrical plate is immersed in said molten metal when part has solidified.

In one embodiment said edge of said first electrical plate is wavy and has protruding edge portions and recessed edge portions and said method includes the step of casting said first electrical plate to said first end connector so that said protruding edge portions are attached to said first end connector but said recessed edge portions are not.

Advantageously, said first electrical plate has a thickness of less than 0.127mm (0.005 inches).

Preferably, said battery includes a second electrical plate and separators, and said method includes the step of winding said first electrical plate, said second electrical plate and separators to form a spirally wound plate and separator assembly.

Advantageously, said method includes the step of performing said winding so that said first electrical plate projects outwardly from one of said spirally wound plate and separator assembly and said second electrical plate projects outwardly from the other end.

Preferably, said battery includes a plurality of first electrical plates, a plurality of second electrical plates, and a plurality of separators and said method comprises the step of arranging said first electrical plates, said second electrical plates and said separators in a stack.

Advantageously, said electrical plates each have a thickness of less than 0.127 mm (0.005 inches).

If desired the, or at least one of said second electrical plates may be impermeable. Alternatively, the, or at least one of, said second electrical plate(s) may be permeable.

For a better understanding of the invention reference will now be made, by way of example, to the accompanying drawings, in which:-
Fig. 1 in a perspective view, partial in cross-section, of one embodiment of a battery to which the present method is applicable;
Fig. 2 is a cross-section of the upper portion of the battery shown in Fig 1;
Fig. 3 is a cross-section of the lower portion of the battery shown in Fig. 1;
Fig 4 shows a graph of temperature versus heat content for lead;
Fig. 5 shows a plan view of a plate used with a second embodiment of a battery to which the present invention is applicable; and
Fig. 6 is a cross-section of a third embodiment of a battery to which the present invention is applicable.

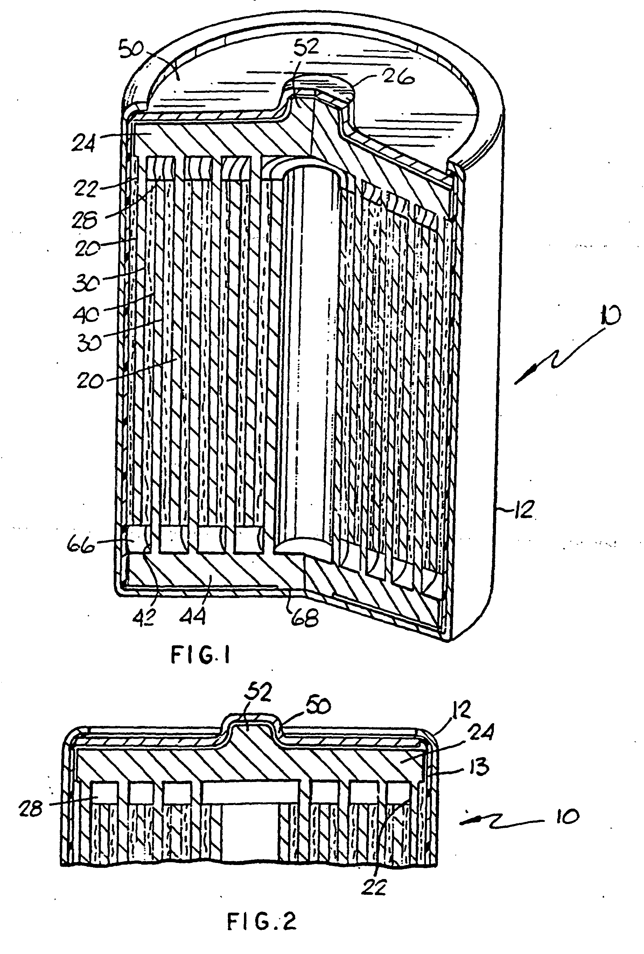

Referring to Figure 1 of the drawings this is shown a battery which is generally identified by the reference numeral 10.

The battery 10 includes a battery case 12 which encloses a spirally wound plate and separator assembly 14 which comprises an anode plate 20, a cathode plate 40, and a separator 30 therebetween. The total number of turns will depend on the thickness of the plates 20, 40 separator 30 and the diameter of the outer case 12. The number of turns shown in the drawings is only for illustrational purposes and is not intended to depict the actual number.

The spirally wound plate and separate assembly 14 is wound from a single ribbon of anode plate and a single ribbon of cathode plate separated by ribbons of separator plate 30. The anode plate 20 and cathode plate 40 are wound axially offset from one another so that an edge 22 of the anode plate 20 projects axially from one end of the spirally wound plate and separator assembly 14 and the edge 42 of the cathode plate 40 projects axially from the other end of the spirally wound plate and separator assembly 14.

The edge 22 of the anode plate 20 is attached to a disk-shaped anode end connector 24 which is in turn attached to an anode terminal 26.

The edge 42 of the cathode plate 40 is attached to a similar disk-shaped cathode end connector 44 which is in turn attached to the cathode terminal formed by the battery case 12.

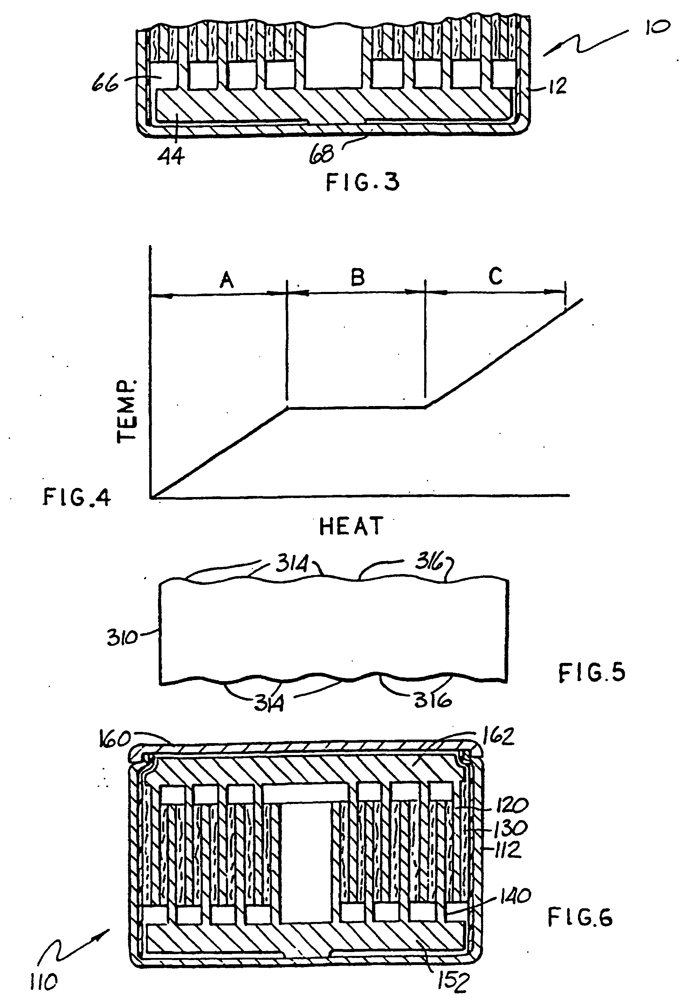

The arrangement of the end connectors 24 and 44 in relation to the battery 10 is shown in greater detail in Figs. 2 and 3 respectively.

As shown in Fig. 2 the edge 22 of the anode plate 20 is connected to the bottom of the end connection 24. The anode plate 20 projects axially from the spirally wound plate and separator assembly 14 such that there is an insulating plate 28 between the upper end of the cathode plate 40 and the anode end connector 24.

The battery case 12 encloses the cylindrical spiral winding and is separated therefrom by a case insulator 13.

The top of the anode end connector 24 is covered with an anode terminal plate 50 which is attached thereto at the top of an axially extending anode end connector tab 52. The anode terminal plate 50 is electrically insulated from the battery case 12 by a case insulator 13.

The edge 42 of the cathode plate 40 is connected to the top of the cathode end connector 44. As in the case of the anode plate 20, the edge 42 of the cathode plate 40 axially protrudes sufficiently from the spirally wound plate end separator assembly 14 so that there is an insulating space 66 between the end of the anode plate 20 and the cathode end connector 44. The bottom of the cathode end connector 44 has an axially protruding tab 68 that is attached to the inner surface of the battery case 12 as shown.

The anode plate 20 and cathode plate 40 are connected to the anode end connector 24 and the cathode end connector 44 respectively as follows.

Firstly, the end connectors are cast in an open top connector mould. While the metal is still molten, the spirally wound plate and separator assembly 14 is dipped into the molten metal to a depth sufficient to submerge the axially protruding edge of one plate but not to such a depth that the non-protruding edge of the opposite polarity plate or the separator 30 are submerged. The end connector is then allowed to harden, and the hardened end connector and attached spirally wound plate and separator assembly 14 are then freed from the mould. The same process is used to attach the opposite end connector.

The temperature and heat content of the molten end connector when the plate edge is submerged is important. If the heat content is too high, the molten metal will melt off the submerged plate edge. If the heat content is too low, the molten metal will be unable to heat the plate sufficiently to form a strong electrical and mechanical connection.

Fig. 4 shows a graph of temperature versus heat content at the melting point of lead. As the graph indicates, lead has a typical melting characteristic. The solid lead increases in temperature as heat is added to it, as shown in portion A of the graph. When it reaches the melting point, however, the temperature remains constant. Additional heat is utilised to melt the solid lead without increasing the temperature of the solid/liquid mixture. This plateau of constant temperature is shown as portion B of the graph. When the lead is fully melted, additional heat then begins to increase the temperature again, as shown in portion C of the graph.

The edge of the spirally wound plate and separator assembly 14 should be submerged into the molten lead of the end connector casting when the molten lead is close to the boundary between the plateau of portion B and the incline of portion C of the graph of Fig. 4. It can be appreciated that if the molten lead is substantially to the left of the boundary, then the metal will be only partially melted when the plates are submerged into it. The partially molten metal will form a relatively poor electrical and mechanical connection with the plates. Making matters worse is that the plates themselves will normally be cooler than the molten metal and will thereby draw heat out of the molten metal, thereby further solidifying it and contributing to an even worse electrical and mechanical connection. On the other hand, if the molten material is substantially to the right of the boundary between portion B and portion C of the graph of Fig. 4, then the temperature is above the melting point and the metal is completely molten. If the edge of the plate is submerged in the molten material at this point, the molten material will have sufficient heat to not only raise the temperature of the plate to the melting point to form a good electrical and mechanical connection, it will have sufficient heat to melt off the edge of the plate.

The precise amount of heat desired in the molten lead in order to result in a good electrical and mechanical connection to the plate without melting the plate, will depend on the alloy characteristics of the plate and the end connector, the submersing temperature of the plate, the volume and configuration of both the end connectors and the plate, the thermodynamic characteristics of the mould, and other factors. Once the general principle and objective is known a person skilled in the art will be able to accomplish the process without undue experimentation.

The plates or the end connectors or both may be fabricated from a lead alloy containing roughly 0.5 to 0.6% tin. The use of lead/tin alloys in battery plates is generally known to produce a so-called tin effect whereby surface passivation is reduced so that charge and discharge characteristics are improved. Alternatively, the plates or end connectors or both may be coated with tin in order to reduce passivation without producing grain boundary corrosion sites in the conductor. Such coating is preferably very thing - of the order of one micron - and may be applied by sputter coating or other techniques known in the art. Finally, the end connectors may be fabricated from a 60/40 alloy of lead/tin while the plates are still pure or substantially pure lead. This lowers the melting temperature and increases the process parameters of the end connectors.

Once the end connectors are cast onto the spirally wound plate and separator assembly 14, the entire unit can be placed into the battery case 12 lined with the case insulator 13. The anode terminal plate 50 is placed over the open end to clockwise the case, and the case is crimped around the anode terminal plate 50 or otherwise connected thereto. It is important that the connection between the battery case 12 and the anode terminal plate 50 includes insulation between the two to prevent a short circuit of the battery. In the embodiment shown in Figs. 1-3, the insulation is accomplished by the battery case insulator 13 extending upwardly and slightly over the top edge of the anode end connection 24 between the anode end connector 24 and the crimp on battery case 12.

The anode end connector tab 52 is then attached to the anode terminal plate 50 at the central indentation of the anode terminal plate 50 by applying sufficient heat to the exterior surface of the central indentation to melt the anode end connector tab 52 onto the interior surface of the central indentation. This heat can be applied with a spot welder or by normal heating means such as a soldering iron. The axially protruding tab 68 of the cathode end connector 44 is attached to the interior surface of the battery case 12 in the same manner. Sufficient heat is applied to the center of the battery case 12 over the axially protruding tab 68 to melt the axially protruding tab 68 onto the interior surface of the battery case 12.

A battery constructed in the manner described above provides excellent support for the plates, and has high resistance to vibrational damage. It also has an excellent electrical and mechanical connection from the plates through the end connectors and terminals because of a continuous crystalline structure between the end connectors and the plates and the absence of any impedance-increasing reduction in cross sectional area for the electrical current path. These features are particularly important in a thin plate battery in which the plates are fragile, numerous and closely spaced, and in which relatively high current loads are possible.

The plates used with another battery to which the present method is applicable is shown in Fig. 5. In this embodiment, the plates 310 have an intermittent edge, in the form of a wavy edge that includes protruding portions 314 and recessed portions 316. The wavy edge facilitate the immersion of the wound plate into the molten lead in the end connector mould by breaking the surface tension of the molten lead. The protruding portions 314 are connected to the end connector whilst the recessed portion 316 are not. The resulting spaces allow liquid to flow between the plates, thereby facilitating the injection of acid or water into the battery.

Yet another battery to which the invention is applicable is shown in Fig. 6, in which the plates and separators are stacked rather than being spirally wound. The battery 110 includes a battery case 112, a set of individual anode plates 120, a set of separators 130 and a set of individual cathode plates 140. The anode plates 120 are electrically and mechanically connected to each other and to an anode terminal 160 by an anode end connector 162, and the cathode plates 140 are electrically and mechanically connected to each other and to a cathode end connector 152. As in the earlier-described embodiment, this embodiment includes a battery case insulator to insulate the battery case from the plates 120, 140 and separators 130 and to insulate the battery case 12 (which is common to the cathode terminal) from the anode terminal, the anode plates 120, and an arrangement for closing the case (not shown). The end connectors 152 and 162 are attached to the plates utilising the casting process described above, to achieve a mechanically strong and electrically good connection.

The battery shown in Fig. 6 can be made in virtually any configuration, for example, to fit into power tool handle. The various configurations can be obtained either by using plates of abruptly or gradually varying edge profiles stacked together or by using plates of a single edge profile and then cutting the sandwiched layers after they are assembled.

## Claims

1. A method of manufacturing a battery having a spirally wound plate and separator assembly which comprises a first spirally wound electrical plate (20; 120; 310) having relatively thin edges and having a first electrical polarity, a first electrical battery terminal (26;160), and a first end connector (24; 162) for establishing electrical communication between said first electrical plate (20; 120; 310) and said first electrical battery terminal (26; 160), said first end connector (24; 162) being connected to said first electrical battery terminal (26; 160) and cast onto said first electrical plate (20; 120), **characterised in that** said casting is carried out by immersing an edge of said first electrical plate in a mould containing molten metal which has a heat content substantially such that the addition of heat will result in an increase in temperature of the molten metal whilst the subtraction of heat will result in the formation of a mixture of solid and molten metal, whereby by drawing a graph in which the ordinate represents the temperature of said metal and the absiscae represents heat input so as to define a first portion (A) in which the temperature of the solid metal rises as heat is added to it, followed by a plateau portion (B) where heat is utilised to melt the solid metal without materially increasing the temperature of the solid/liquid mixture, and a third portion (C) having an incline and representing an increase of the temperature of the melt as heat is added to it, the plate is submerged in the molten metal when its heat content is such, that it corresponds to a point, which is close to the boundary between the plateau portion (B) and the incline of the third portion (C) and whereby an electrical and mechanical connection is formed between the first end connector and the first electrical plate without the molten metal having sufficient heat to melt off the edge of the plate.

2. A method according to Claim 1, wherein said first electrical plate (20; 120; 310) is impermeable.

3. A method according to Claim 1, wherein said first electrical plate is permeable.

4. A method according to Claim 1, 2 or 3, **characterised in that** said molten metal is contained in an open end connector mould.

5. A method according to Claim 1, 2, 3 or 4, **characterised in that** said edge (22) of said first electrical plate (20; 120; 310) is immersed in said molten metal when part has solidified.

6. A method according to any preceding claim, **characterised in that** said edge of said first electrical plate (310) is wavy and has protruding edge portions (314) and recessed edge portions (316) and said method includes the step of casting said first electrical plate (310) to said first end connector so that said protruding edge portions (314) are attached to said first end connector but said recessed edge portions (316) are not.

7. A method according to any preceding claim, **characterised in that** said battery includes a second electrical plate (40) and separators (30), and said method includes the step of winding said first electrical plate (20), said second electrical plate (40) and separators (30) to form said spirally wound plate and separator assembly (14).

8. A method according to Claim 7, including the step of performing said winding so that said first electrical plate (20) projects outwardly from one of said spirally wound plate and separator assembly (14) and said second electrical plate (40) projects outwardly from the other end.

9. A method according to any of Claims 1 to 6, **characterised in that** said battery includes a plurality of first electrical plates (120), a plurality of second electrical plates (140), and a plurality of separators (130), and said method comprises the step of arranging said first electrical plates (120), said second electrical plates (140) and said separators (130) in a stack.

10. A method according to Claim 7, 8, or 9, wherein the or at least one of said second electrical plates (40) is impermeable.

11. A method according to Claim 7, 8, or 9, wherein the or at least one of said second electrical plates is permeable.

## Patentansprüche

1. Verfahren zum Herstellen einer Batterie mit einer spiralig gewickelten Elektroden- und Trennanordnung, die eine erste spiralig gewickelte Elektrodenplatte (20; 120; 310) mit relativ dünnen Rändern und einer ersten Polarität, einen ersten elektrischen Batterieanschluss (26; 160) und einen ersten Endverbinder (24; 162) zum Einrichten einer elektrischen Verbindung zwischen der ersten Elektrodenplatte (20; 120; 310) und dem ersten elektrischen Batterieanschluss (26; 160) aufweist, wobei der erste Endverbinder (24; 162) mit dem ersten elektrischen Batterieanschluss (26; 160) verbunden und an die erste Elektrodenplatte (20; 120) angegossen ist, **dadurch gekennzeichnet, dass** das Angießen ausgeführt wird, indem ein Rand der ersten Elektrodenplatte in eine Form eingetaucht wird, die geschmolzenes Metall enthält, das einen Wärmeinhalt derart aufweist, dass ein Zuführen von Wärme in einer Erhöhung der Temperatur des geschmolzenen Metalles resultiert, während ein Abziehen von Wärme in der Bildung einer Mischung aus festem und geschmolzenem Metall resultiert, wobei in einem Grafen, in dem die Ordinate die Temperatur des Metalles darstellt und die Abszisse die Wärmezufuhr darstellt, ein erster Bereich (A) definiert ist, in dem die Temperatur des festen Metalles ansteigt, wenn ihm Wärme zugeführt wird, gefolgt von einem Plateaubereich (B), in dem die Wärme verwendet wird, um das feste Metall zu schmelzen, ohne im Wesentlichen die Temperatur der Fest-/Flüssigmischung anzuheben und ein dritter Bereich (C) vorliegt, der eine Steigung aufweist und ein Ansteigen der Temperatur der Schmelze angibt, wenn ihr Wärme zugeführt ist, wobei die Platte in das geschmolzene Metall eingetaucht wird, wenn dessen Wärmeinhalt so ist, dass er einem Punkt entspricht, der nahe an der Grenze zwischen dem Plateaubereich (B) und dem ansteigenden dritten Bereich (C) gelegen ist, und wobei eine elektrische und mechanische Verbindung zwischen dem ersten Endanschluss und der ersten Elektrodenplatte gebildet wird, ohne dass das geschmolzene Metall eine ausreichende Wärme hat, um den Rand der Platte wegzuschmelzen.

2. Verfahren nach Anspruch 1, wobei die erste Elektrodenplatte (20; 120; 310) undurchlässig ist.

3. Verfahren nach Anspruch 1, wobei die erste Elektrodenplatte durchlässig ist.

4. Verfahren nach Anspruch 1, 2 oder 3, **dadurch gekennzeichnet, dass** das geschmolzene Metall in einer Durchlauf-Verbindungsform enthalten ist.

5. Verfahren nach Anspruch 1, 2, 3 oder 4, **dadurch gekennzeichnet, dass** der Rand (22) der ersten Elektrodenplatte (20; 120; 310) in das geschmolzene Metall eingetaucht wird, wenn ein Teil davon verfestigt ist.

6. Verfahren nach einem der vorhergehenden Ansprüche, **dadurch gekennzeichnet, dass** der Rand der ersten Elektrodenplatte (310) wellig geformt ist und vorragende Randbereiche (314) und zurückgezogene Randbereiche (316) aufweist, und wobei das Verfahren den Schritt einschließt, die erste Elektrodenplatte (310) an den ersten Endverbinder so anzugießen, dass die vorragenden Randbereiche (314) mit dem ersten Endverbinder verbunden werden, die zurückgezogenen Randbereiche (360) jedoch nicht.

7. Verfahren nach einem der vorhergehenden Ansprüche, **dadurch gekennzeichnet, dass** die Batterie eine zweite Elektrodenplatte (40) und Trennstücke (30) aufweist, und dass das Verfahren den Schritt einschließt, die erste Elektrodenplatte (20), die zweite Elektrodenplatte (40) und die Trennstücke (30) aufzuwickeln, sodass sie die spiralig gewickelte Platten- und Trennanordnung (14) bilden.

8. Verfahren nach Anspruch 7, wobei das Aufwickeln so erfolgt, dass die erste Elektrodenplatte (20) von einer der spiralig gewickelten Platten- und Trennanordnungen (14) nach außen herausragt und die zweite Elektrodenplatte (40) aus dem anderen Ende nach außen herausragt.

9. Verfahren nach einem der Ansprüche 1 bis 6, **dadurch gekennzeichnet, dass** die Batterie mehrere erste Elektrodenplatten (120), mehrere zweite Elektrodenplatten (140) und mehrere Trennstücke (130) aufweist, und dass das Verfahren den Schritt aufweist, die ersten Elektrodenplatten (120), die zweiten Elektrodenplatten (140) und die Trennstücke (130) in einem Stapel anzuordnen.

10. Verfahren nach Anspruch 7, 8 oder 9, wobei die oder zumindest eine der zweiten Elektrodenplatten (40) undurchlässig ist.

11. Verfahren nach Anspruch 7, 8 oder 9, wobei die oder zumindest eine der zweiten Elektrodenplatte durchlässig ist.

## Revendications

1. Procédé de fabrication d'une pile comportant une plaque enroulée en forme de spirale et un assemblage de séparateurs qui comprend une première plaque électrique enroulée en forme de spirale (20 ; 120 ; 310) ayant des bords relativement minces et ayant une première polarité électrique, une première borne de pile électrique (26 ; 160) et un premier connecteur d'extrémité (24 ; 162) pour établir une communication électrique entre ladite première plaque électrique (20 ; 120 ; 310) et ladite première borne de pile électrique (26 ; 160), ledit premier connecteur d'extrémité (24 ; 162) étant relié à ladite première borne de pile électrique (26 ; 160) et moulé sur ladite première plaque électrique (20 ; 120), **caractérisé en ce que** ledit moulage est réalisé par immersion d'un bord de ladite première plaque électrique dans un moule contenant du métal fondu dont la contenance thermique est essentiellement telle que l'apport de chaleur entraîne une augmentation de la température du métal fondu alors que la soustraction de chaleur entraîne la formation d'un mélange de métal solide et fondu, si bien qu'en dessinant un graphique dans lequel les ordonnées représentent la température dudit métal et les abscisses représentent l'apport de chaleur de manière à définir une première partie (A) dans laquelle la température du métal solide s'élève lors d'un apport de chaleur, puis une partie en plateau (B) dans laquelle la chaleur est utilisée pour fondre le métal solide sans augmenter matériellement la température du mélange solide/liquide et une troisième partie (C) formant une pente et représentant une augmentation de la température du mélange lors d'un apport de chaleur, la plaque est submergée dans le métal fondu lorsque sa contenance thermique est telle qu'elle correspond à un point qui est près de la limite entre la partie en plateau (B) et la pente de la troisième partie (C) et si bien qu'une connexion électrique et mécanique se forme entre le premier connecteur d'extrémité et la première plaque électrique sans que le métal fondu ait suffisamment de chaleur pour fondre l'extrémité de la plaque.

2. Procédé selon la revendication 1, dans lequel ladite première plaque électrique (20 ; 120 ; 310) est imperméable.

3. Procédé selon la revendication 1, dans lequel ladite première plaque électrique est perméable.

4. Procédé selon la revendication 1, 2 ou 3, **caractérisé en ce que** ledit métal fondu est contenu dans un moule de connecteur à extrémité ouverte.

5. Procédé selon la revendication 1, 2, 3 ou 4, **caractérisé en ce que** ledit bord (22) de ladite première plaque électrique (20 ; 120 ; 310) est immergé dans ledit métal fondu lorsqu'une partie est solidifiée.

6. Procédé selon l'une quelconque des revendications précédentes, **caractérisé en ce que** ledit bord de ladite première plaque électrique (310) est ondulé et comporte des parties de bord en saillie (314) et des parties de bord en retrait (316) et **en ce que** ledit procédé comprend l'étape consistant à mouler ladite première plaque électrique (310) sur ledit premier connecteur d'extrémité de sorte que lesdites parties de bord en saillie (314) sont fixées audit premier connecteur d'extrémité mais que lesdites parties de bord en retrait (316) ne le sont pas.

7. Procédé selon l'une quelconque des revendications précédentes, **caractérisé en ce que** ladite pile comprend une deuxième plaque électrique (40) et des séparateurs (30) et **en ce que** ledit procédé comprend l'étape consistant à enrouler ladite première plaque électrique (20) et ladite deuxième plaque électrique (40) et les séparateurs (30) pour former ladite plaque enroulé en forme de spirale et ledit assemblage de séparateurs.

8. Procédé selon la revendication 7, comprenant l'étape consistant à réaliser ledit enroulement de sorte que ladite première plaque électrique (20) s'étende vers l'extérieur à partir de ladite plaque enroulée en forme de spirale et dudit assemblage de séparateurs (14) et que ladite deuxième plaque électrique (40) s'étende vers l'extérieur à partir de l'autre extrémité.

9. Procédé selon l'une quelconque des revendications 1 à 6, **caractérisé en ce que** ladite pile comprend une pluralité de premières plaques électriques (120), une pluralité de deuxièmes plaques électriques (140) et une pluralité de séparateurs (130) et **en ce que** ledit procédé comprend l'étape consistant à disposer lesdites premières plaques électriques (120), lesdites deuxièmes plaques électriques (140) et lesdits séparateurs (130) en pile.

10. Procédé selon la revendication 7, 8 ou 9, dans lequel la ou au moins une desdites deuxièmes plaques électriques (40) est imperméable.

11. Procédé selon la revendication 7, 8 ou 9, dans lequel la ou au moins une desdites deuxièmes plaques électriques est perméable.
